(19) Europäisches Patentamt
European Patent Office
Office européen des brevets

(11) **EP 1 907 429 B1**

(12) **EUROPEAN PATENT SPECIFICATION**

(45) Date of publication and mention
of the grant of the patent:
**02.09.2015 Bulletin 2015/36**

(51) Int Cl.:
***C08F 4/659*** *(2006.01)*     ***C08F 110/06*** *(2006.01)*
*C08F 4/6592* *(2006.01)*

(21) Application number: **06776168.4**

(22) Date of filing: **10.07.2006**

(86) International application number:
**PCT/EP2006/006736**

(87) International publication number:
**WO 2007/006537 (18.01.2007 Gazette 2007/03)**

(54) **PROPYLENE POLYMER COMPOSITION**

PROPYLENPOLYMERZUSAMMENSETZUNG

COMPOSITION DE POLYMERE DE PROPYLENE

(84) Designated Contracting States:
**AT BE BG CH CY CZ DE DK EE ES FI FR GB GR HU IE IS IT LI LT LU LV MC NL PL PT RO SE SI SK TR**

(30) Priority: **08.07.2005 EP 05014905**

(43) Date of publication of application:
**09.04.2008 Bulletin 2008/15**

(73) Proprietor: **Borealis Technology Oy**
**06201 Porvoo (FI)**

(72) Inventors:
• **ERNST, Eberhard**
**D-06667 Weissenfels (DE)**
• **LEHMUS, Petri**
**FIN-00850 Helsinki (FI)**

• **BARTKE, Michael**
**06126 Halle (DE)**
• **HUHTANEN, Lauri**
**FIN-07940 Loviisa (FI)**

(74) Representative: **Kador & Partner**
**Corneliusstraße 15**
**80469 München (DE)**

(56) References cited:
**WO-A-03/051934     US-A- 5 573 840**

Remarks:
The file contains technical information submitted after the application was filed and not included in this specification

EP 1 907 429 B1

**Description**

The present invention is related to a new propylene polymer having a low amount of impurities as well as to the process of the same and its use.

Conventional polymers contaminated with impurities - although sometimes in rather low levels - make the polymer unsuitable for certain end applications such as capacitor films or for certain food or medical applications where a high purity is needed. The ash content of the polymer product is one of the indicators of the undesired impurities. The impurities include metallic and non-metallic impurities, which are often originating from the catalyst system used for the polymerization, particularly aluminum, titanium, silicon, halogen (such as Cl and F) and boron residues. This specific problem may arise especially in cases where supported metallocene catalysts are employed since due to the low activities of the same usually considerably high amounts of catalyst are needed. As a negative side effect, the polymer product is contaminated with high amount of residual catalyst components. To achieve very low levels of these residues, the polymer products are often washed after production.

Of course for high demanding applications not only the amount of impurities should be considered but also the mechanical properties as for example the stiffness of the product.

WO 02/16455 discloses a propylene homopolymer with a molecular weight distribution (MWD) of 1.7 to 5. The pentad content of this polymer is higher than 93 % and the xylene solubles (XS) is lower than 1 wt.-%. Moreover, the aluminum and chloride levels in this propylene homopolymer are lower than 25 ppm. The polymer is prepared by a two-stage process using metallocene catalyst supported on fluorinated silica in the presence of a highly fluorinated trisarylboron activator compound. The aluminum and chloride level in this propylene homopolymer is reduced i.a. due to the use of a boron-based cocatalyst, which in turn can provide boron residues to the polymer.

US-A-5 573 840 discloses a polymeric insulating material having a high dielectric breakdown voltage. The material comprises polypropylene which has been obtained in a yield of at least 300,000 g/g-Ti based on titanium in a catalyst upon polymerization, contains ash in an amount not greater than 40 ppm by weight when analyzed by completely burning the polypropylene in air, said ash containing titanium in an amount not greater than 1 ppm by weight based on the weight of the polypropylene, and also contains chlorine in an amount not greater than 2 ppm by weight and boiling n-heptane soluble matter in an amount not smaller than 1 wt. % but not greater than 10 wt. %. To further improve the dielectric breakdown voltage an inorganic oxide or hydroxide free of particles of 10 $\mu$m and greater in diameter and having an average particle size not greater than 1 $\mu$m, an organopolysilane, a maleic-anhydride-grafted polypropylene, or a silane compound containing at least one organic polyether group can be added to the polypropylene.

The object of the present invention is to provide further propylene polymers having a low amount of impurities making the product suitable for high demanding end applications as for example capacitor films, food packaging or medical packaging articles. Preferably propylene polymer is suitable for end applications requiring good mechanical properties as inter alia a high stiffness.

The finding of the present invention is that a propylene polymer can be produced which contains significantly reduced amounts of residues in the final propylene polymer enabling the use of the polymer in demanding end applications without that any washing step is needed. Also a method using a very feasible catalyst system for producing such polymer is provided.

Hence, the patent invention provides a propylene polymer according to claim 1 which particularly comprises a low Al-content and advantageously low amounts of other residues mainly originating from the catalyst. The propylene polymer of the invention comprises an aluminum residue content of preferably less than 10 ppm, still more preferably less than 9 ppm and boron residue content of preferably less than 10 ppm, still more preferably less than 9 ppm.

Such a polymer with very low amounts of metallic or non-metallic residues arising from the catalyst component makes it suitable for high demanding applications, wherein the presence of such residues should be avoided, as for example for capacitor films or for food packaging or medical packaging articles.

In a very preferable embodiment the propylene polymer comprises the above low content of Al- and B-residues and additionally a reduced amount of silicon (Si) residues or chlorine (Cl) residues or a reduced amount of both silicon and chlorine residues. Preferably the silicon residues content in the propylene polymer is less than 10 ppm, more preferably less than 5 ppm. Depending on the desired end application, the polypropylene polymer may contain Si-residues even less than 1 ppm. The chlorine content in the propylene polymer is less than 10 ppm, more preferably less than 5 ppm. Depending on the desired end application the polymer propylene of the invention may contain even as low as 1 ppm of Cl-residues.

In a further embodiment the total amount of aluminum, boron and silicon residues is less than 10 ppm. In another embodiment the total amount of Al, B, Si and Cl is less than 15 ppm, more preferably less than 10 ppm.

The terms "aluminium (Al), boron (B), chlorine (Cl) or silicon (Si) content" or "Al-, B-, Cl- or Si-residue" used above and below mean any residues of Al, B, Cl and Si, in elementary or non-elementary form (e.g. ionic/non-ionic form, such as in a form of an oxide) that are mainly originating from the catalyst and can be recovered from the propylene polymer. These residues may be determined using the methods as defined later below under "Determination methods and definitions".

In a preferred embodiment the propylene polymer is avoid of any boron residues that originate from the catalyst system. The catalyst system includes one or more catalyst components selected from one or more catalytically active component and optionally one or more activators as the cocatalyst. The components can be combined, e.g. supported on a carrier material, before the catalyst system is subjected to a polymerization reactor or they can be added separately to the polymerization reactor.

The purity of the propylene polymer can be further characterized by the amount of its volatiles, The volatiles are substances being driven off as vapor at room or slightly elevated temperatures, from a polymer. Hence, it is preferred that the volatiles content is lower than 400 ppm, more preferably lower than 300 ppm, still more preferred lower than 200 ppm. The volatiles content may be determined by the method described later below under "Determination methods and definitions".

Not only the amount of volatiles, but preferably also the amount of non-volatile residues may significantly be reduced in the propylene polymer of the invention. The ash content is the non-volatile inorganic matter of a composition which remains after subjecting it to a high decomposition temperature. The ash content may be determined by the method described later below under "Determination methods and definitions" It is in particular preferred that the ash content of the propylene polymer is less than 50 ppm, more preferably less than 40 ppm and most preferably less than 30 ppm.

In a preferable embodiment, especially for the above mentioned high demanding applications, the propylene polymer is a high crystalline propylene homopolymer. A high crystalline propylene homopolymer is characterized by a high stereoregularity, i.e. high isotacticity. Generally, a high isotactic propylene polymer is preferred as it has better mechanical properties, in particular an improved stiffness. Therefore, it is preferred that the propylene polymer has an isotacticity expressed in mmmm pentad concentration of at least 0.940, more preferably of at least 0.945 and still more preferably of at least 0.950, determined by NMR-spectroscopy (for the determination method see below under "Determination methods and definitions").

Xylene solubles a part of the polymer soluble in cold xylene determined by dissolution in boiling xylene and letting the insoluble part crystallize from the cooling solution (for the method see below "Determination methods and definitions"). The xylene solubles fraction contains polymer chains with low molecular weight and low stereo-regularity. Hence, the propylene polymer having a high crystallinity has xylene solubles below 1.0 wt.-%.

The molecular weight distribution (MWD) (also determined herein as polydispersity) is the relation between the numbers of molecules in a polymer and the individual chain length. The molecular weight distribution can be measured e.g. by gel permeation chromatography (GPC), whereby it is expressed as the ratio of weight average molecular weight ($M_w$) and number average molecular weight ($M_n$). Number average molecular weight ($M_n$) and weight average molecular weight ($M_w$) as well as the molecular weight distribution (MWD) are determined according to ISO 16014.

As a broad molecular weight distribution improves the processability of the propylene polymer, therefore, advantageously the polydispersity ($M_w/M_n$) is up to 20, preferably up to 10, more preferably up to 8. In an alternative embodiment the polydispersity ($M_w/M_n$) is between 1 to 8.

Moreover, the molecular weight of a polymer can be further expressed by way of its melt flow rate (MFR). The melt flow rate (MFR) mainly depends on the average molecular weight. An increase in molecular weight means a decrease in the MFR-value.

The melt flow rate MFR is measured in g/10 min of the polymer discharged under specific temperature and pressure conditions and is the measure of a viscosity of a polymer. Melt flow rate measured under a load of 2.16 kg (ISO 1133) is denoted as $MFR_2$.

It is preferred that the propylene polymer has an $MFR_2$ of up to 10 g/10 min, more preferably up to 6 g/10 min, still more preferably up to 4 g/10 min. A preferred range for the $MFR_2$ is 1 to 10 g/10 min.

The propylene polymer is a homopolymer of propylene. The homopolymer according to this invention has less than 0.2 wt.-%, more preferably less than 0.1 wt.-%, still more preferably less than 0.05 wt.-%, yet more preferably less than 0.005 wt.-%, other alpha-olefins than propylene in the polymer. Most preferred no other alpha-olefins are detectable.

The invention further covers multimodal propylene polymers with respect to the molecular weight distribution (MWD).

A propylene polymer with a broad molecular weight distribution (MWD) may be unimodal (very broad single maxima) or multimodal, preferably bimodal, with respect to the weight average molecular weight distribution (MWD). "Multimodal" or "multimodal distribution" describes a frequency distribution that has several relative maxima. In particular, the expression "modality of a polymer" refers to the form of its molecular weight distribution (MWD) curve, i.e. the appearance of the graph of the polymer weight fraction as a function of its molecular weight.

The molecular weight distribution (MWD) of polymer produced in a single polymerization stage using a single monomer mixture, a single polymerization catalyst and a single set of process conditions (i.e. temperature, pressure, etc.) shows a single maximum the breadth of which depends on catalyst choice, reactor choice, process conditions, etc., i.e. such a polymer is unimodal.

The invention covers a propylene polymer which comprises at least the two components

(i) a propylene homopolymer and
(ii) another propylene homopolymer

which components (i) and (ii) are different with respect to the weight average molecular weight ($M_w$).

One of the components (i) and (ii) has a lower molecular weight and thus higher MFR than the other of components (i) and (ii), i.e. than the higher molecular weight component. Accordingly, at least a bimodal homopropylene is provided which comprises a lower molecular weight (LMW) component and a higher molecular weight (HMW) component. The weight ratios thereof may vary. The amount of component (i) may be 30 to 70 wt.-%, preferably 40 to 60 wt-%, more preferably 45 to 55 wt.-% and the amount of component (ii) may be 30 to 70 wt-%, preferably 40 to 60 wt.-%, more preferably 45 to 55 wt.-%, calculated from the total propylene polymer.

In a preferred embodiment, the propylene polymer as described above is a reactor-made propylene polymer (also called as a reactor powder). The reactor-made propylene polymer means herein the reaction product as obtained from the polymerization process, i.e. the reactor-made propylene polymer has not been subjected to any washing or treatment step to decrease or remove (1) the Al- and B-residues, preferably the Al-, B-, Cl- and Si-residues, which mainly originate from the catalyst. Also preferably, the reactor-made propylene polymer has not been subjected to (2) any deashing step in a manner known in the art to decrease or remove the ash content of the polymer. If desired, the reactor-made propylene polymer of this embodiment may then further be treated in a subsequent treatment step, e.g. washing step, in a known manner for optimizing, e.g. for further reducing one or more of the following: Al, B, Cl, Si and ash content of the product.

Moreover, the propylene polymer is obtainable by a single site catalyst (SSC) polymerization. The SSC includes metallocene and non-metallocene catalysts as known in the art. Preferably, the propylene polymer is obtainable by a metallocene catalysed polymerization, more preferably using the process and/or catalyst as defined below.

The propylene polymer is obtainable by a solid non-silica supported single site -based catalyst, such as a metallocene-based catalyst.

According to a further preferable embodiment of the invention, the propylene polymer as defined above is obtainable by a solid catalyst which (1) comprises at least a metallocene complex as a catalytically active component, optionally together with an activator as the cocatalyst and (2) has a productivity of at least 30 kg PP/g catalyst, typically of at least 40 kg PP/g catalyst, preferably of at least 50 kg/PP/g catalyst, more preferably of at least 60 kg PP/g catalyst. The productivity as defined above is a known expression in the field and describes the catalytic activity of the catalyst. The term "kg PP/g catalyst" means the amount of polypropylene produced with 1 g of the catalyst.

In addition, the present invention comprises also the use of the propylene polymer as described above as such or as a component of a polymer blend in various end use applications with high purity requirements. Accordingly, the invention further provides an article comprising the propylene polymer of the invention. Such articles include containers and packaging articles for medical, food and electrical applications (such as capacitor film applications).

Accordingly, the propylene polymer can be processed as such or as a blend with further polymer component(s), optionally in the presence with additives (such as well known in the art) to produce various end applications in a known manner. E.g. the propylene polymer can be moulded or extruded to articles, e.g. for films, mono- and biaxially oriented films, fibers and molded articles. Such extruded or molded articles include mono- and multilayered articles as known in the art. Furthermore, films include cast and blown films. Due to the high purity the inventive propylene polymer is very feasible in the field of food packaging and medical packaging, as well as in electrical applications.

Moreover the present invention is directed to a layered structure, preferably a film, which comprises at least one layer comprising the propylene polymer as defined above. Preferably the layers of the film consist essentially of the propylene polymer as defined above. In addition, the film comprising the inventive propylene polymer may be a bi-oriented film and/or a capacitor film.

The articles including films can be produced according to or analogously to methods well known in the art.

Moreover, the present invention provides also a polymerization process for producing the propylene polymer.

The process for preparing the inventive propylene polymer comprises at least the step of polymerizing propylene in the presence of a solid non-silica supported catalyst. "Non-silica supported catalyst" means herein that part or all of the active catalyst components have not been supported on a solid, porous silica-based carrier material as is the case in a silica-supported catalyst, wherein the catalyst component(s) are conventionally impregnated to the pores of silica carrier particles.

In principal any polymerization method including slurry and gas phase polymerization can be used for producing the polymer composition. Slurry polymerization is preferably a bulk polymerization. "Bulk" means a polymerization in a reaction medium comprising at least 60 wt.-% monomer.

The invention also provides a process for producing the propylene polymer comprising a propylene homopolymer component (i) as defined above, wherein the propylene, is polymerized in the presence of a polymerization catalyst.

In case a multimodal, e.g. at least bimodal, polymer comprising at least two different components (i) and (ii) with different molecular weight distribution (MWD), the propylene polymer may be produced by blending each or part of the components in-situ during the polymerization process thereof (in-situ process) or, alternatively, by blending mechanically two or more separately produced components in a manner known in the art.

It is also possible to produce a multimodal propylene polymer in one reactor by selecting e.g. one or more of (1) changing polymerization conditions, (2) using at least two different catalysts, (3) using multi site, e.g. dual site catalysts.

Alternatively, the invention further provides a process for producing a propylene polymer comprising at least two different propylene homopolymer components (i) and (ii) as defined above, wherein each component (i) and (ii) is produced by polymerizing propylene in the presence of a polymerization catalyst in a multistage polymerization process using one or more polymerization reactors, which may be the same or different, e.g. at least loop-loop, gas-gas or any combination of loop and gas reactors. Each stage may be effected in parallel or sequentially using the same or different polymerization method(s). In case of a sequential stages each components, e.g. (i) and (ii), may be produced in any order by carrying out the polymerization in each step, except the first step, in the presence of the polymer component formed, in the preceding step. Preferably, the catalyst used and added in the first step is present in the subsequent step(s). Alternatively, the same or different catalyst can be added in the subsequent step(s).

Multistage processes include also bulk/gas phase reactors known as multizone gas phase reactors for producing multimodal propylene polymer.

Thus a further embodiment provides a process for producing any of the above polymer composition, which comprises (i) a propylene homopolymer component and (ii) an propylene homopolymer component, wherein the process includes a step of:

(a) polymerizing in a slurry reactor, preferably a loop reactor, propylene, in the presence of a polymerization catalyst to produce a first propylene polymer component (one of components (i) and (ii)), and, optionally, transferring the reaction product of step (a) to a subsequent gas phase reactor and

(b) polymerizing in a gas phase reactor propylene in the presence of the reaction product of step (a) to produce a second polymer component (the other of components (i) and (ii)) for obtaining the propylene polymer, and recovering the obtained composition.

A preferred multistage process is a "loop-gas phase"-process, such as developed by Borealis A/S, Denmark (known as BORSTAR® technology) described e.g. in patent literature, such as in EP 0887 379 or in WO92/12182.

If the polymer composition has at least a multimodal MWD, then the lower molecular weight (LMW) fraction and the higher molecular weight (HMW) fraction can be made in different steps (a) and (b), in any order.

Optionally, and preferably, the process may also comprise a prepolymerization step in a manner known in the field and which may precede the polymerisation step (a).

The process is preferably a continuous process.

Preferably, in the process for producing the propylene polymer as defined above the conditions for the slurry reactor of step (a) may be as follows:

- the temperature is within the range of 40°C to 110°C, preferably between 60°C and 100°C, 70-90 °C,

- the pressure is within the range of 20 bar to 80 bar, preferably between 30 bar to 60 bar,

- hydrogen can be added for controlling the molar mass in a manner known per se.

Subsequently, the reaction mixture from the slurry (bulk) reactor (step a) is transferred to the gas phase reactor, i.e. to step (b), whereby the conditions in step (b) are preferably as follows:

- the temperature is within the range of 50°C to 130°C, preferably between 60°C and 100°C,

- the pressure is within the range of 5 bar to 50 bar, preferably between 15 bar to 3 5 bar,

- hydrogen can be added for controlling the molar mass in a manner known per se.

The residence time can vary in both reactor zones. In one embodiment of the process for producing the propylene polymer the residence time in slurry reactor, e.g. loop is in the range 0.5 to 5 hours, e.g. 0.5 to 2 hours and the residence time in gas phase reactor will generally be 1 to 8 hours.

If desired, the polymerization may be effected in a known manner under supercritical conditions in the slurry, preferably loop reactor, and/or as a condensed mode in the gas phase reactor.

The process of the invention or any embodiments thereof above or below enable highly feasible means for producing and further tailoring the propylene polymer composition within the invention. E.g. the properties of the polymer composition can be adjusted or controlled in a known manner e.g. with one or more of the following process parameters: temperature, hydrogen feed, propylene feed e.g. in the gas phase reactor, catalyst, the type and amount of an external donor (if used), split between components, e.g. components (i) and (ii).

The above process enables very feasible means for obtaining the reactor-made propylene polymer as defined above.

The catalyst used is a solid non-silica supported catalyst comprising at least a single site catalyst component, including a metallocene or a non-metallocene catalyst component, preferably a metallocene complex, as a catalytically active component. The catalyst may optionally comprise an activator as a cocatalyst. Preferably, the catalyst comprises a metallocene component and an activator as the cocatalyst component. Further preferable, the cocatalyst contains aluminium, i.e. is a Al-containing cocatalyst, such as aluminoxane.

In a further preferable embodiment the propylene polymer is obtainable by a solid non-silica supported catalyst polymerization, whereby the catalyst preferably contains an Al-based cocatalyst. More preferably, said solid non-silica supported catalyst is free from any boron-containing cocatalyst, more preferably free from any boron-based catalyst components. "Non-silica supported catalyst" means a support or carrier material which is other than silica or a modified silica carrier.

It is in particular preferable that the catalyst is obtainable by the emulsion solidification technology described in WO03/051934. This document is herewith included entirely to this application by reference. Hence the catalyst is preferably a non-silica supported metallocene catalyst comprising an organo-metallic compound of a transition metal of group 3 to 10 or the periodic table (IUPAC), or of an actinide or lantanide, in the form of solid catalyst particles, obtainable by a process comprising the steps of

a) preparing a solution of one or more catalyst components;

b) dispersing said solution in a solvent immiscible therewith to form an emulsion in which said one or more catalyst components are present in the droplets of the dispersed phase,

c) solidifying said dispersed phase to convert said droplets to solid particles and optionally recovering said particles to obtain said catalyst.

Preferably a solvent, more preferably an organic solvent, is used to form said solution. Still more preferably the organic solvent is selected from the group consisting of a linear alkane, cyclic alkane, linear alkene, cyclic alkene, aromatic hydrocarbon and halogen-containing hydrocarbon.

Moreover the immiscible solvent forming the continuous phase is an inert solvent, more preferably the inmiscible solvent comprises a fluorinated organic solvent and/or a functionalized derivative thereof, still more preferably the inmiscible solvent comprises a semi-, highly- or perfluorinated hydrocarbon and/or a functionalized derivative thereof. It is in particular preferred, that said immiscible solvent comprises a perfluorohydrocarbon or a functionalised derivative thereof, preferably $C_3$-$C_{30}$ perfluoroalkanes, -alkenes or -cycloalkanes, more preferred $C_4$-$C_{10}$ perfluoroalkanes, -alkenes or -cycloalkanes, particularly preferred perfluorohexane, perfluoroheptane, perfluorooctane or perfluoro (methylcyclohexane) or a mixture thereof.

Furthermore it is preferred that the emulsion comprising said continuous phase and said dispersed phase is a bi-or multiphasic system as known in the art. An emulsifier may be used for forming the emulsion. After the formation of the emulsion system, said catalyst is formed in situ from catalyst components in said solution.

In principle, the emulsifying agent may be any suitable agent which contributes to the formation and/or stabilization of the emulsion and which does not have any adverse effect on the catalytic activity of the catalyst. The emulsifying agent may e.g. be a surfactant based on hydrocarbons optionally interrupted with (a) heteroatom(s), preferably halogenated hydrocarbons optionally having a functional group, preferably semi-, highly- or perfluorinated hydrocarbons as known in the art. Alternatively, the emulsifying agent may be prepared during the emulsion preparation, e.g. by reacting a surfactant precursor with a compound of the catalyst solution. Said surfactant precursor may be a halogenated hydrocarbon with at least one functional group, e.g. a highly fluorinated $C_1$ to $C_{30}$ alcohol, which reacts e.g. with a cocatalyst component, such as aluminoxane.

In principle any solidification method can be used for forming the solid particles from the dispersed droplets. According to one preferable embodiment the solidification is effected by a temperature change treatment. Hence the emulsion subjected to gradual temperature change of up to 10 °C per minute, preferably 0.5 to 6 per minute and more preferably 1 to 5 °C per minute. Even more preferred the emulsion is subjected to a temperature change of more than 40°C, preferably more than 50 °C within less than 10 seconds, preferably less than 6 seconds.

The recovered particles have preferably an average size range of 5 to 200 pm, more preferably 10 to 100um.

Moreover, the form of solidified particles have preferably a spherical shape, a predetermined particles size distribution and a surface area of less than 50 $m^2/g$, preferably less than 30 $m^2/g$ and more preferably less than 20 $m^2/g$, wherein said particles are obtained by the process as described above.

For further details, embodiments and examples of the catalyst components, continuous and dispersed phase system, emulsion formation method, emulsifying agent and solidification methods reference is made e.g. to the above WO03/051934.

The catalytically active component is preferably of a transition metal compound of formula (I)

$$(L)_m R_n MX_q \qquad (I)$$

wherein

M is a transition metal of group 3 to 10 or the periodic table (IUPAC), or of an actinide or lantanide,
each X is independently a monovalent anionic ligand, such as σ-ligand,
each L is independently an organic ligand which coordinates to M,
R is a bridging group linking two ligands L,
m is 1,2 or 3,
n is 0 or 1,
q is 1,2 or 3 and
m+q is equal to the valency of the metal.

Said catalytically active component is a single site (SS) catalyst component including metallocenes and non-metallocenes

In a preferred definition, each L is independently

(a) a substituted or unsubstituted cyclopentadiene or a mono-, bi- or multifused derivative of a cyclopentadiene which optionally bear further substituents and/or one or more hetero ring atoms from a Group 13 to 16 of the Periodic Table (IUPAC); or

(b) an acyclic, $\eta^1$- to $\eta^4$- or $\eta^6$ -ligand composed of atoms from Groups 13 to 16 of the Periodic Table, and in which the open chain ligand may be fused with one or two, preferably two, aromatic or non-aromatic rings and/or bear further substituents; or (c) a cyclic σ-, $\eta^1$- to $\eta^4$- or $\eta^6$-, mono-, bi- or multidentate ligand composed of unsubstituted or substituted mono-, bi- or multicyclic ring systems selected from aromatic or non-aromatic or partially saturated ring systems and containing carbon ring atoms and optionally one or more heteroatoms selected from Groups 15 and 16 of the Periodic Table.

By "σ-ligand" is meant in a known manner a group bonded to the metal at one or more places via a sigma bond.

According to a preferred embodiment said organotransition metal compound (I) is a group of compounds known as metallocenes. Said metallocenes bear at least one organic ligand, generally 1, 2 or 3, e.g. 1 or 2, which is η-bonded to the metal, e.g. a $\eta^{2-6}$-ligand, such as a $\eta^5$-ligand. Preferably, a metallocene is a Group 4 to 6 transition metal, which contains at least one $\eta^5$-ligand..

Preferably the metallocene compound has a formula (II):

$$(Cp)_m R_n MX_q \qquad (II)$$

wherein M is Zr, Hf or Ti, m=1 or 2, and at least one Cp is independently a cyclopenadienyl, indenyl, tetrahydroindenyl or fluorenyl, whereby each of said Cp may be unsubstituted or substituted; the optional one or more substituent(s) may be independently selected from a group including halogen, hydrocarbyl (e.g. C1-C20-alkyl, C2-C20-alkenyl, C2-C20-alkynyl, C3-C12-cycloalkyl, C6-C20-aryl or C7-C20-arylalkyl), C3-C12-cycloalkyl which contains 1, 2, 3 or 4 heteroatom(s) in the ring moiety, C6-C20-heteroaryl, C1-C20-haloalkyl, $-SiR''_3$, $-OSiR''_3$, $-SR''$, $-PR''_2$ or $-R''_2$, each R'' is independently a hydrogen or hydrocarbyl, e.g. C1-C20-alkyl, C2-C20-alkenyl, C2-C20-alkynyl, C3-C12-cycloalkyl or C6-C20-aryl; or e.g. in case of $-NR''_2$, the two substituents R'' can form a ring, e.g. five- or six-membered ring, together with the nitrogen atom wherein they are attached to; preferably, m is 2 and both Cp-rings are indenyl rings which each independently bear one or two substituents, preferably one substituent, at the five ring of the indenyl moiety, more preferably at 2-position (such substituent at 2-position is preferably selected from an alkyl, such as $C_1$-$C_6$ alkyl, e.g. methyl or ethyl, or trialkyloxysiloxy, wherein each alkyl is independently selected from $C_1$-$C_6$ alkyl, such as methyl or ethyl), and one or more substituents, preferably one substituent, at the six ring of the indenyl moiety, more preferably at 4-position (such substituent at the 4-position is preferably $C_6$-$C_{20}$ aromatic or heteroaromatic ring moiety, such as phenyl or naphthyl, preferably phenyl, which is optionally substituted with one or more substitutents, such as $C_1$-$C_6$ alkyl). The Cp ligands of the metallocene are preferably linked with a bridge member R, in case of indenyl, typically at 1-position. The bridge member R may contain one or more bridge atoms selected from e.g. C, Si and/or Ge, preferably from C and/or Si. One preferable bridge R is R'$_2$Si=, wherein R' is selected independently from one or more of e.g. $C_1$-$C_{10}$ alkyl, $C_1$-$C_{20}$ alkyl, such as $C_6$-$C_{12}$ aryl, or $C_7$-$C_{40}$, such as $C_7$-$C_{12}$ arylalkyl, wherein alkyl as such or as part of arylalkyl is preferably $C_1$-$C_6$ alkyl, such as ethyl or methyl, preferably methyl, and aryl is preferably phenyl. The bridge R'$_2$Si= is preferably e.g. $C_1$-$C_6$ alkyl$_2$Si=, diphenylSi= or $C_1$-$C_6$ alkylphenylSi=, such as Me2Si=.

The above described active catalyst components are commercially available or may be prepared according to the methods described in the literature. As an example of feasible single site catalysts, preferably metallocenes, and the preparation methods thereof, reference is made to the above WO03/051934, as well as to EP836608, EP 576 970 and EP722956, without limiting to these.

As mentioned above the catalyst system may further comprise an activator as a cocatalyst, as described in WO 03/051934, which is enclosed hereby with reference.

Preferred as cocatalysts for metallocenes and non-metallocenes, if desired, are the aluminoxanes, in particular the C1-C10-alkylaluminoxanes, most particularly methylaluminoxane (MAO). Such aluminoxanes can be used as the sole cocatalyst or together with other cocatalyst(s). Thus besides or in addition to aluminoxanes, other cation complex forming catalysts activators can be used. Said activators are commercially available or can be prepared according to the prior art literature.

Further aluminoxane cocatalysts are described i.a. in WO-A-9428034 which is incorporated herein by reference. These are linear or cyclic oligomers of having up to 40, preferably 3 to 20, -(Al(R"')O)- repeat units (wherein R"' is hydrogen, C1-C10-alkyl (preferably methyl) or C6-C18-aryl or mixtures thereof).

The use and amounts of such activators are within the skills of an expert in the field. As an example, with the boron activators, 5:1 to 1:5, preferably 2:1 to 1:2, such as 1:1, ratio of the transition metal to boron activator may be used. In case of preferred aluminoxanes, such as methylaluminumoxane (MAO), the amount of Al, provided by aluminoxane, can be chosen to provide a molar ratio of Al: transition metal e.g. in the range of 1 to 10 000, suitably 5 to 8000, preferably 10 to 7000, e.g. 100 to 4000, such as 1000 to 3000. Typically in case of solid (heterogeneous) catalyst the ratio is preferably below 500.

The quantity of cocatalyst to be employed in the catalyst of the invention is thus variable, and depends on the conditions and the particular transition metal compound chosen in a manner well known to a person skilled in the art.

Any additional components to be contained in the solution comprising the organotransition compound may be added to said solution before or, alternatively, after the dispersing step.

## Determination Methods and Definitions

The following definitions of terms and determination methods apply for the above general description of the invention as well as to the below examples unless otherwise defined.

## Elementary analysis

The below described elementary analysis was used for determining the content of the elementary residues which are mainly originating from the catalyst, especially the A1-, B- and Si-residues in the polymer. Said A1-, B- and Si-residues can be in any form, e.g. in elementary or ionic form, which can be recovered and detected from the propylene polymer using e.g. the below described ICP-method. The method can also be used for determining the Ti content of the polymer. It is understood that also other known methods can be used which would result in similar results.

## ICP (Inductively coupled plasma emission) -spectrometry

**ICP-instrument:** The instrument for determination of A1-, Si- and B-content was ICP Optima 2000 DV, PSN 620785 (supplier PerkinElmer Instruments, Belgium) with the software of the instrument.

Detection limits are 0,1 ppm (Al), 0,1 ppm (Si) and 0,1 ppm (B).

The polymer sample was first ashed in a known manner, then dissolved in an appropriate acidic solvent. The dilutions of the standards for the calibration curve are dissolved in the same solvent as the sample and the concentrations chosen so that the concentration of the sample would fall within the standard calibration curve.

**ppm:** means parts per million by weight.

**Ash content:** Ash content is measured according to ISO 3451-1 (1997) standard.

**Calculated ash, Al- and B-content:**

The ash and the above listed elements, Al and/or B can also be calculated from a propylene polymer based on the polymerization activity of the catalyst as exemplified in the examples. These values would give the upper limit of the presence of said residues originating from the catalyst.

Thus the estimate catalyst residues is based on catalyst composition and polymerization productivity, catalyst residues in the polymer can be estimated according to:

$$\text{Total catalyst residues [ppm]} = 1/\text{ productivity } [kg_{PP}/g_{catalyst}] *1000$$

$$\text{Al residues [ppm]} = w_{Al,\ catalyst}\ [\%] *\ \text{total catalyst residues [ppm] }/100$$

$$\text{Zr-residues [ppm]} = w_{Zr,\ calatyst}\ [\%] *\ \text{total catalyst residues [ppm] }/100$$

(Similar calculations apply also e.g. for B, Cl and Si residues)

**Particle size distribution:** is measured via Coulter Counter LS 200 at room temperature with n-heptane as medium.

**NMR**

**NMR-spectroscopy measurements:**

The $C^{13}$NMR spectra of polypropylenes were recorded on Bruker 400MHz spectrometer at 130 °C from samples dissolved in 1,2,4-trichlorobenzene/benzene-d6 (90/10 w/w). For the pentad analysis the assignment is done according to the methods described in literature.

(T. Hayashi, Y. Inoue, R. Chüjö, and T. Asakura, Polymer 29 138-43 (1988).and Chujo R, et al,Polymer 35 339 (1994).

The NMR-measurement was used for determining the mmmm pentad concentration in a manner well known in the art.

**The volatiles content:** can be measured by so called static Headspace Analysis described in the texbiook: Pyrolysis and GC in Polymer Analysis, Edited by S.A. Liebman and E.J. Levy, Marcel Dekker, Inc., 1985. The gas chromatography/head-space gas chromatography (GC-HS) analysis is widely used in the automotive industry. The company Volkswagen AG has developed a standard, which is generally accepted and used in the plastic industry. It is known as "VW standard PV 3341". Test duration was one hour and the test temperature 160°C according to the requirements used for capacitor films.

**The molecular weights, $M_w$ and $M_n$, and molecular weight distribution MWD expressed as polydispersity $M_w/M_n$** of polymers were determined with A Millipore Waters ALC/GPC operating at 135 °C and equipped with two mixed bed and one $10^7$ Å TSK-Gel columns (TOSOHAAS 16S) and a differential refractometer detector. The solvent 1,2,4-trichlorobezene was applied at flow rate of 1 ml/min. The columns were calibrated with narrow molecular weight distribution polystyrene standards and narrow and broad polypropylenes. Reference is also made to ISO 16014.

**The xylene solubles (XS, wt%):** analysis according to the known method: 2.0 g of polymer was dissolved in 250 ml p-xylene at 135°C under agitation. After 30=t:2 minutes the solution was allowed to cool for 15 minutes at ambient temperature and then allowed to settle for 30 minutes at 25±0.5°C. The solution was filtered and evaporated in nitrogen flow and the residue dried under vacuum at 90°C until constant weight is reached.

$$XS\% = (100 \times m_1 \times v_0) / (m_0 \times v_1),$$

wherein

$m_0$= initial polymer amount (g)
$m_1$= weight of residue (g)
$v_0$= initial volume (ml)
$V_1$= volume of analyzed sample (ml)

**Melting temperature $T_m$, crystallization temperature $T_c$, and the degree of crystallinity:** measured with Mettler TA820 differential scanning calorimetry (DSC) on 5-10 mg samples. Both crystallization and melting curves were obtained during 10°C/min cooling and heating scans between 30°C and 225°C. Melting and crystallization temperatures were taken as the peaks of endotherms and exotherms.

Also the melt- and crystallization enthalpy (**Hm and He**) were measured by the DSC method according to ISO 11357-3.

**Chlorine residues content:** The content of Cl-residues is measured from samples in the known manner using X-ray fluorescence (XRF) spectometry. The instrument was X-ray fluorescention Philips PW2400, PSN 620487, (Supplier: Philips, Belgium) software X47. Detection limit for Cl is 1 ppm.

**MFR$_2$:** measured according to ISO 1133 (230°C, 2.16 kg load).

**Stiffness Film TD (transversal direction), Stiffness Film MD (machine direction), Elongation at break TD and Elongation at break MD:** these were determined according to ISO527-3

**Haze and transparency:** were determined: ASTM D1003

**Experimental part**

The used raw materials and chemicals are commercially available or can be prepared according to the known methods described in the literature.

**Example 1:**

**Catalyst preparation**

The catalyst was prepared as described in example 5 of WO 03/051934, but adjusting the Al- and Zr-ratio (Al/Zr) to 291 in a manner known in the art (Zr = 0,42 wt.-% and Al = 36,27 wt%).

**Catalyst characteristics:**

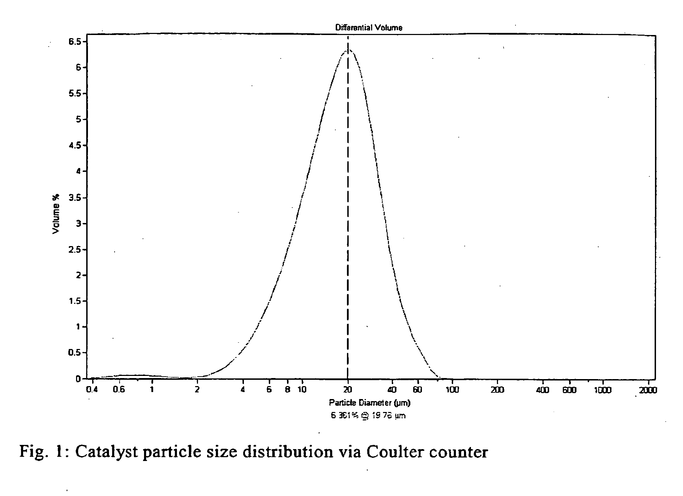

Al- and Zr- content were analyzed via above mentioned method to 36,27 wt.-% Al and 0,42 %-wt. Zr. The average particle diameter (analyzed via Coulter counter) is 20 $\mu$m and particle size distribution is shown in Fig. 1

**Polymerization:**

A 5 liter stainless steel reactor was used for propylene polymerizations. 1100 g of liquid propylene (Borealis polymerization grade) was fed to reactor. 0.1 ml triethylaluminum (100%, purchased from Crompton) was fed as a scavenger and 15 mmol hydrogen (quality 6.0, supplied by Åga) as chain transfer agent. Reactor temperature was set to 30 °C. 21,4 mg catalyst were flushed into to the reactor with nitrogen overpressure. The reactor was heated up to 70 °C in a period of about 14 minutes. Polymerization was continued for 50 minutes at 70 °C, then propylene was flushed out, 5 mmol hydrogen were fed and the reactor pressure was increased to 20 bars by feeding (gaseous-) propylene. Polymerization continued in gas-phase for 210 minutes, then the reactor was flashed, the polymer was dried and weighted.

Polymer yield was weighted to 790 g, that equals a productivity of 36,9 $kg_{PP}/g_{catalyst}$.

**Ash content:** Ash content was analyzed to 68 ppm

**Estimate residues:**

Total catalyst residues estimated to 27 ppm

A1 residues estimated to 9,8 ppm

Zr residues estimated to 0,1 ppm

**Example 2:**

The catalyst was prepared as in Example 1 (Al/Zr = 291)

**Polymerization**

A 5 liter stainless steel reactor was used for propylene polymerizations. 1100 g of liquid propylene (Borealis polymerization grade) was fed to reactor. 0.1 ml triethylaluminum (100%, purchased from Crompton) was fed as a scavenger and 15 mmol hydrogen (quality 6.0, supplied by Åga) as chain transfer agent. Reactor temperature was set to 30 °C. 30,6 mg catalyst was flushed into to the reactor with nitrogen overpressure. The reactor was heated up to 70 °C in a period of about 14 minutes. Polymerization was continued for 40 minutes at 70 °C, then propylene was flushed out, 5 mmol hydrogen were fed and the reactor pressure was increased to 20 bars by feeding (gaseous) propylene. Polymerization continued in gas-phase for 181 minutes, then the reactor was flashed, the polymer was dried and weighted.
Polymer yield was weighted to 890 g, equalling a productivity of 29 $kg_{PP}/g_{catalyst}$.

**Ash content:** Ash content was analyzed to 47 ppm

**Estimate residues:**

Total catalyst residues estimated to 34 ppm

A1 residues estimated to 12 ppm

Zr residues estimated to 0,1 ppm

**Example 3:**

The same catalyst as in Example 1 was used in this example (Al/Zr= 291)

**Polymerization**

A 5 liter stainless steel reactor was used for propylene polymerizations. 1100 g of liquid propylene (Borealis polymerization grade) was fed to reactor. 0.1 ml triethylaluminum (100%, purchased from Crompton) was fed as a scavenger and 20 mmol hydrogen (quality 6.0, supplied by Åga) as chain transfer agent. Reactor temperature was set to 30 °C. 29,4 mg catalyst was flushed into to the reactor with nitrogen overpressure. The reactor was heated up to 70 °C in a period of about 14 minutes. Polymerization was continued for 55 minutes at 70 °C, then propylene was flushed out, 10 mmol hydrogen were fed and the reactor pressure was increased to 20 bars by feeding (gaseous) propylene. Polymerization continued in gas-phase for 189 minutes, then the reactor was flashed, the polymer was dried and weighted.
Polymer yield was weighted to 815 g, equalling a productivity of 27,7 $kg_{PP}/g_{catalyst}$.
**Estimate residues:**

Total catalyst residues estimated to 36 ppm

A1 residues estimated to 13 ppm

Zr residues estimated to 0,2 ppm

**Example 4:**

**Catalyst preparation**

The catalyst was prepared as described in example 1, but using the ratio: Al/Zr = 271 (Al = 34,50 wt.-% and Zr = 0,43 wt.-%).

**Polymerization:**

A 5 liter stainless steel reactor was used for propylene polymerizations. 1100 g of liquid propylene (Borealis polymerization grade) was fed to reactor. 0.2 ml triethylaluminum (100%, purchased from Crompton) was fed as a scavenger and 15 mmol hydrogen (quality 6.0, supplied by Åga) as chain transfer agent. Reactor temperature was set to 30 °C. 29.1 mg catalyst were flushed into to the reactor with nitrogen overpressure. The reactor was heated up to 70 °C in a period of about 14 minutes. Polymerization was continued for 50 minutes at 70 °C, then propylene was flushed out, 5 mmol hydrogen were fed and the reactor pressure was increased to 20 bars by feeding (gaseous-) propylene. Polymerization continued in gas-phase for 144 minutes, then the reactor was flashed, the polymer was dried and weighted.

Polymer yield was weighted to 901 g, that equals a productivity of 31 $kg_{PP}/g_{catalyst}$.

**Estimate residues:**

Total catalyst residues estimated to 32 ppm

A1 residues estimated to 11 ppm

Zr residues estimated to 0,1 ppm

**Example 5:**

The same catalyst as in Example 1 was used (Al/Zr= 291).

**Polymerization:**

A 5 liter stainless steel reactor was used for propylene polymerizations. 1100 g of liquid propylene (Borealis polymerization grade) was fed to reactor. 0.05 ml triethylaluminum (100%, purchased from Crompton) was fed as a scavenger and 30 mmol hydrogen (quality 6.0, supplied by Aga) as chain transfer agent. Reactor temperature was set to 30 °C. 20,1 mg catalyst was flushed into to the reactor with nitrogen overpressure. The reactor was heated up to 70 °C in a period of about 15 minutes. Polymerization was continued for 40 minutes at 70 °C, then propylene was flushed out, the reactor pressure was increased to 20 bars by feeding (gaseous) propylene. Polymerization continued in gas-phase for 370 minutes, then the reactor was flashed, the polymer was dried and weighed.

Polymer yield was weighed to 1096 g, equaling a productivity of 54.4 $kg_{PP}/g_{catalyst}$.

**Estimate residues:**

Total catalyst residues estimated to 18 ppm

A1 residues estimated to 6,5 ppm

Zr residues estimated to 0,08 ppm

The experimental data of the propylene polymers of examples 1 to 5 are listed in table 1 below. The data show the advantageous properties of the present propylene polymer already when obtained directly from the polymerization process without any treatment steps for removing any of the catalysts. Also the advantageous mechanical properties of the polymers of the invention are apparent from the below table.

Table 1: Experimental data of examples 1-5

| Example no. | | Ex. 1 | Ex. 2 | Ex. 3 | Ex. 4 | Ex.5 |
|---|---|---|---|---|---|---|
| Productivity | $kg_{PP}/g_{cat}$ | 36,9 | 29 | 27,7 | 31 | 54.4 |
| Catalyst residue (Calculated) | ppm | 27 | 34 | 36 | 32 | 18 |
| B | ppm | n.d. | n.d. | n.d. | n.d. | n.d. |
| Al | ppm | 9,8 | 12 | 13 | 11 | 8.4 |
| Si | ppm | n.d. | n.d. | n.d. | n.d. | n.d. |
| Zr | ppm | 0,1 | 0,1 | 0,2 | 0,1 | 0.08 |
| Cl | ppm | n.d. | n.d. | n.d. | n.d. | n.d. |
| MFR | g/10' | 1,79 | 1,78 | 3,9 | 2 | 1,6 |
| Mw | g/mol | 467000 | 499000 | 400000 | 453000 | 481000 |
| Mw/Mn | - | 2,7 | 2,7 | 3 | 2,8 | 2,8 |

(continued)

| Example no. | | Ex. 1 | Ex. 2 | Ex. 3 | Ex. 4 | Ex.5 |
|---|---|---|---|---|---|---|
| XS | wt% | 0,51 | 0,56 | 0,4 | 0,85 | n.d. |
| mmmm | - | 0,95 | 0,96 | 0,96 | 0,96 | n.d. |
| Stiffness Film TD | MPa | 1008 | 964 | 1019 | 1011 | 638 |
| Stiffness Film MD | MPa | 1013 | 1028 | 1094 | 1059 | 658 |
| Elongation at Break TD | % | 718 | 613 | 780 | 700 | 701 |
| Elongation at Break MD | % | 660 | 608 | 702 | 691 | 641 |
| Tm | °C | 149,8 | 150,2 | 152 | 150,6 | 151 |
| Hm | J/g | 97,4 | 95,1 | 97,7 | 99,5 | 99 |
| Tc | °C | 106,4 | 106,5 | 113,3 | 111,9 | 105 |
| Hc | J/g | 88,6 | 88,7 | 94,8 | 74,6 | 89 |
| Transparency | % | | | | 94 | n.d. |
| Haze | % | | | | 7,8 | n.d. |
| Volatiles | ppm | | 200 | | | n.d. |

**Claims**

1. A propylene polymer obtainable by a solid non-silica supported single site catalyst polymerization, the polymer having an aluminum residue content of less than 25 ppm, a boron residue content less than 25 ppm, and a xylene solubles (XS) content below 1.0 wt.%, wherein the propylene polymer is a propylene homopolymer comprising at least two propylene homopolymer components (i) and (ii) wherein one of the components (i) and (ii) is a LMW component with higher MFR and the other of components (i) and (ii) is a HMW component with lower MFR.

2. The propylene polymer according to claim 1 wherein the propylene polymer is a high crystalline propylene homopolymer.

3. The propylene polymer according to claim 1 or 2, wherein the propylene polymer has an isotacticity of higher than 0.940 mmmm pentad concentration determined by NMR-spectroscopy.

4. The propylene polymer according to any one of the preceding claims wherein the aluminum residue content is less than 10 ppm.

5. The propylene polymer according to any one of the preceding claims wherein the boron residue content is less than 10 ppm.

6. The propylene polymer according to any one of the preceding claims wherein the ash content is less than 50 ppm.

7. The propylene polymer according to any one of the preceding claims wherein the silicon residue content is less than 10 ppm.

8. The propylene polymer according to any one of the preceding claims wherein the total amount of aluminum, boron and silicon residues is less than 10 ppm.

9. The propylene polymer according to any one of the preceding claims wherein the chlorine residue content in the propylene polymer is less - than 10 ppm, more preferably less than 5 ppm.

10. The propylene polymer according to any one of the preceding claims wherein the volatiles content determined by GC-HS for one hour at 160°C is less than 400 ppm.

11. The propylene polymer according to any one of the preceding claims wherein the propylene polymer is a reactor-made propylene polymer.

12. The propylene polymer according to any one of the preceding claims wherein the propylene polymer has an Mw/Mn of not higher than 20.0.

13. The propylene polymer according to any one of the preceding claims wherein the propylene polymer has an $MFR_2$ of up to 10 g/10min.

14. The propylene polymer according to any one of the preceding claims wherein the propylene polymer is obtainable by a metallocene catalyzed polymerization, preferably in the absence of a boron-containing activator as a cocatalyst.

15. The propylene polymer according to any one of the preceding claims wherein the propylene polymer is obtainable by a solid, non-silica supported catalyst, preferably in the presence of Al-containing activator as a cocatalyst.

16. The propylene polymer according to any one of the preceding claims wherein the propylene polymer is obtainable by a solid catalyst which: (1) comprises at least a metallocene complex as a catalytically active component, optionally together with an activator as the cocatalyst, and (2) has a productivity of at least 30 kg PP/g catalyst, preferably of at least 40 (kg PP)/(g catalyst), more preferably of at least 50 (kg PP)/(g catalyst).

17. A process for producing a propylene polymer according to any one of the preceding claims comprising the step of polymerising propylene in the presence of a solid non-silica supported single site catalyst.

18. The process according to claim 17, wherein the catalyst is a non-silica supported metallocene catalyst comprising an organo-metallic compound of a transition metal of group 3 to 10 of the periodic table (IUPAC), or of an actinide or lantanide, in the form of solid catalyst particles, obtainable by a process comprising the steps of

   a) preparing a solution of one or more catalyst components;
   b) dispersing said solution in a solvent immiscible therewith to form an emulsion in which one or more catalyst components are present in the droplets of the dispersed phase,
   c) solidifying said dispersed phase to convert said droplets to solid particles and optionally recovering said particles to obtain said catalyst.

19. The process according to claim 17 or 18 wherein the catalyst comprises a catalyst component of a transition metal compound of formula (I)

$$(L)_m R_n MX_q \qquad (I)$$

wherein

   M is a transition metal as defined in claim 18, and
   each X is independently a $\sigma$-ligand,
   each L is independently an organic ligand which coordinates to M,
   R is a bridging group linking two ligands L,
   m is 1,2 or 3,
   n is 0 or 1,
   q is 1,2 or 3 and
   m+q is equal to the valency of the metal.

20. The process according to any one of claims 17 to 19 wherein the catalyst further comprises an aluminum based cocatalyst, preferably aluminoxane cocatalyst.

21. The process according to any one of the preceding claims 17 to 20, wherein the immiscible solvent comprises a perfluorohydrocarbon or a functionalized derivative thereof, preferably C3 to C30 perfluoralkane, -alkenes or cycloalkanes.

22. The process according to any one of the preceding claims 17 to 21, wherein (b) the emulsion system is formed optionally by using an emulsifying agent and (c) said catalyst is formed in situ from catalyst components in said solution.

23. The process according to any one of the preceding claims 17 to 22, wherein the solidification is effected by a temperature change treatment.

24. The process according to any one of claims 17 to 23, wherein the catalyst comprises a metallocene catalyst component of formula (I)

$$(L)_m R_n MX_q \qquad (I)$$

wherein

M is a Zr, Hf or Ti, and
each X is independently a $\sigma$-ligand,
each L is independently an organic ligand containing a substituted or unsubstituted cyclopentadienyl ligand which is bonded to M via a $\pi$-bond, preferably a cyclopentadienyl, indenyl, tetrahydroindenyl or fluorenyl, whereby each of said L may be unsubstituted or substituted with one or more substituents;
R is a bridging group linking two ligands L,
m is 1,2 or 3,
n is 0 or 1,
q is 1,2 or 3 and
m+q is equal to the valency of the metal.

25. The process according to any one of the preceding claims 17 to 24, wherein the process is a multi-stage process comprising the steps of

a) polymerizing propylene monomers in the presence of the catalyst obtainable as claimed in anyone of the preceding claims 17 to 24 to produce a first propylene polymer component,
b) transferring the reaction product of step a) to a subsequent gas phase reactor,
c) polymerizing propylene monomers in the presence of the reaction product of step a) to produce a second propylene polymer component for obtaining the propylene polymer as defined in anyone of the preceding claims 1 to 16 and recovering the obtained product.

26. A propylene polymer obtainable by the process as defined in any of the preceding claims 17 to 25.

27. A method for reducing the aluminum and boron content of an $\alpha$-olefin polymer obtainable by polymerization of alpha-olefin monomers in the presence of a metallocene single site catalyst, wherein said polymer is produced using a process as defined in any one of claims 17 to 25.

28. Use of the propylene polymer according to any one of the claims 1 to 16 or claim 26 for films, fibers and molded articles.

29. Use of the propylene polymer according to any one of the preceding claims 1 to 16 or claim 26 for food packaging or medical packaging articles.

30. An article comprising the propylene polymer according to any one of the preceding claims 1 to 16 or claim 26.

31. The article according to claim 30, wherein the article is a film, fiber or molded article.

32. The article according to claim 30, wherein the article is a food packaging or medical packaging article.

33. Layered structure, preferably a film, comprising one or more layers of which at least one layer comprises the propylene polymer of anyone of the preceding claims 1 to 16 or claim 26.

34. The film according to claim 31 or 33, comprising at least one layer which consists essentially of the propylene polymer as defined in anyone of claims 1 to 16 or claim 26.

35. The film according to claim 31, 33 or 34, which is a capacitor film.

**36.** A biaxially oriented polypropylene film comprising a propylene polymer according to anyone of the preceding claims 1 to 16 or claim 26.

**Patentansprüche**

**1.** Propylenpolymer, das durch eine feste, nicht silica-geträgerte Single-Site-Katalysator-Polymerisation erhalten werden kann, wobei das Polymer einen Aluminiumrestgehalt von weniger als 25 ppm, einen Borrestgehalt von weniger als 25 ppm und einen Gehalt an xylollöslichen Bestandteilen (XS) von unter 1,0 Gew.-% hat, wobei das Propylenpolymer ein Propylenhomopolymer ist, das mindestens zwei Propylenhomopolymerbestandteile (i) und (ii) umfasst, wobei einer von den Bestandteilen (i) und (ii) ein LMW-Bestandteil mit einem höheren MFR und der andere von den Bestandteilen (i) und (ii) ein HMW-Bestandteil mit einem niedrigeren MFR ist.

**2.** Propylenpolymer nach Anspruch 1, wobei das Propylenpolymer ein hochkristallines Propylenhomopolymer ist.

**3.** Propylenpolymer nach Anspruch 1 oder 2, wobei das Propylenpolymer eine Isotaktizität mit einer mmmm-Pentadenkonzentration von mehr als 0,940 hat, bestimmt mittels NMR-Spektroskopie.

**4.** Propylenpolymer nach einem der vorhergehenden Ansprüche, wobei der Aluminiumrestgehalt weniger als 10 ppm ist.

**5.** Propylenpolymer nach einem der vorhergehenden Ansprüche, wobei der Borrestgehalt weniger als 10 ppm ist.

**6.** Propylenpolymer nach einem der vorhergehenden Ansprüche, wobei der Aschegehalt weniger als 50 ppm ist.

**7.** Propylenpolymer nach einem der vorhergehenden Ansprüche, wobei der Siliziumrestgehalt weniger als 10 ppm ist.

**8.** Propylenpolymer nach einem der vorhergehenden Ansprüche, wobei die Gesamtmenge an Aluminium-, Bor- und Siliziumresten weniger als 10 ppm ist.

**9.** Propylenpolymer nach einem der vorhergehenden Ansprüche, wobei der Chlorrestgehalt in dem Propylenpolymer weniger als 10 ppm ist, vorzugsweise weniger als 5 ppm.

**10.** Propylenpolymer nach einem der vorhergehenden Ansprüche, wobei der Gehalt an flüchtigen Bestandteilen, bestimmt mittels GC-HS für eine Stunde bei 160 °C, weniger als 400 ppm ist.

**11.** Propylenpolymer nach einem der vorhergehenden Ansprüche, wobei das Propylenpolymer ein reaktorhergestelltes Propylenpolymer ist.

**12.** Propylenpolymer nach einem der vorhergehenden Ansprüche, wobei das Propylenpolymer ein Mw/Mn von nicht mehr als 20,0 hat.

**13.** Propylenpolymer nach einem der vorhergehenden Ansprüche, wobei das Propylenpolymer einen $MFR_2$ von bis zu 10 g/10 min hat.

**14.** Propylenpolymer nach einem der vorhergehenden Ansprüche, wobei das Propylenpolymer durch eine metallocenkatalysierte Polymerisation, vorzugsweise in der Abwesenheit eines borhaltigen Aktivators als einen Cokatalysator, erhalten werden kann.

**15.** Propylenpolymer nach einem der vorhergehenden Ansprüche, wobei das Propylenpolymer durch einen festen, nicht silica-geträgerten Katalysator, vorzugsweise in der Gegenwart eines Al-haltigen Aktivators als einen Cokatalysator, erhalten werden kann.

**16.** Propylenpolymer nach einem der vorhergehenden Ansprüche, wobei das Propylenpolymer durch einen festen Katalysator erhalten werden kann, der:

(1) mindestens einen Metallocenkomplex als einen katalytisch aktiven Bestandteil umfasst, optional zusammen mit einem Aktivator als den Cokatalysator, und

(2) eine Produktivität von mindestens 30 kg PP/g Katalysator, vorzugsweise von mindestens 40 (kg PP)/(g Katalysator) und besonders vorzugsweise von mindestens 50 (kg PP)/(g Katalysator) aufweist.

17. Verfahren zur Herstellung eines Propylenpolymers nach einem der vorhergehenden Ansprüche, umfassend den Schritt des Polymerisierens von Propylen in der Gegenwart eines festen, nicht silica-geträgerten Singe-Site-Katalysators.

18. Verfahren nach Anspruch 17, wobei der Katalysator ein nicht silicageträgerter Metallocenkatalysator in der Form von festen Katalysatorpartikeln ist, der eine organometallische Verbindung von einem Übergangsmetall der Gruppe 3 bis 10 des Periodensystems (IUPAC) oder von einem Actinid oder Lanthanoid umfasst und durch ein Verfahren erhältlich ist, welches die folgenden Schritte umfasst:

a) Herstellen einer Lösung aus ein oder mehreren Katalysatorbestandteilen;
b) Dispergieren der Lösung in einem Lösungsmittel, das damit nicht mischbar ist, um eine Emulsion zu bilden, in der ein oder mehrere Katalysatorbestandteile in Tröpfchen von der dispergierten Phase vorliegen;
c) Verfestigen der dispergierten Phase, um die Tröpfchen in feste Partikeln umzuwandeln und optional Gewinnen von den Partikeln, um den Katalysator zu erhalten.

19. Verfahren nach Anspruch 17 oder 18, wobei der Katalysator einen Katalysatorbestandteil von einer Übergangsmetallverbindung mit der Formel (I)

$$(L)_m R_n M X_q \qquad (I)$$

umfasst,
wobei

M ein Übergangsmetall, wie es in Anspruch 18 definiert ist, ist, und
jeder X unabhängig ein $\sigma$-Ligand ist,
jeder L unabhängig ein organischer Ligand ist, der an M koordiniert,
R eine Brückengruppe ist, die zwei Liganden L verbindet,
m 1, 2 oder 3 ist,
n 0 der 1 ist,
q 1, 2 oder 3 ist und
m + q gleich der Valenz von dem Metall ist.

20. Verfahren nach einem der Ansprüche 17 bis 19, wobei der Katalysator ferner einen aluminiumbasierenden Cokatalysator umfasst, vorzugsweise einen Aluminoxan-Cokatalysator.

21. Verfahren nach einem der vorhergehenden Ansprüche 17 bis 20, wobei das nicht mischbare Lösungsmittel einen Perfluorkohlenwasserstoff oder ein funktionalisiertes Derivat davon, vorzugsweise C3 bis C30 Perfluoralkan, -alkene oder -cycloalkene, umfasst.

22. Verfahren nach einem der vorhergehenden Ansprüche 17 bis 21, wobei

(b) das Emulsionssystem optional unter Verwendung eines Emulsionsmittels gebildet wird und
(c) der Katalysator in situ aus Katalysatorbestandteilen in der Lösung gebildet wird.

23. Verfahren nach einem der vorhergehenden Ansprüche 17 bis 22, wobei die Verfestigung durch eine Temperaturänderungsbehandlung bewirkt wird.

24. Verfahren nach einem der Ansprüche 17 bis 23, wobei der Katalysator einen Metallocenkatalysatorbestandteil mit der Formel (I)

$$(L)_m R_n M X_q \qquad (I)$$

umfasst,
wobei

M ein Zr, Hf oder Ti ist, und

jeder X unabhängig ein σ-Ligand ist,

jeder L unabhängig ein organischer Ligand ist, der einen substituierten oder unsubstituierten Cyclopentadienyl-Liganden enthält, der an M über eine π-Bindung gebunden ist, vorzugsweise ein Cyclopentadienyl, Indenyl, Tetrahydroindenyl oder Fluorenyl, wobei jeder von den L unsubstituiert oder mit ein oder mehreren Substituenten substituiert sein kann;

R eine Brückengruppe ist, die zwei Liganden L verbindet,

m 1, 2 oder 3 ist,

n 0 der 1 ist,

q 1, 2 oder 3 ist und

m + q gleich der Valenzzahl von dem Metall ist.

25. Verfahren nach einem der vorhergehenden Ansprüche 17 bis 24, wobei das Verfahren ein mehrstufiges Verfahren ist, das die folgenden Schritte umfasst:

   a) Polymerisieren von Propylenmonomeren in der Gegenwart von dem Katalysator, der, wie es in einem der vorhergehenden Ansprüche 17 bis 24 beansprucht ist, hergestellt werden kann, um einen ersten Propylenpolymerbestandteil herzustellen,
   b) Übertragen von dem Reaktionsprodukt aus dem Schritt a) zu einem nachfolgenden Gasphasenreaktor,
   c) Polymerisieren von Propylenmonomeren in der Gegenwart von dem Reaktionsprodukt aus dem Schritt a), um einen zweiten Propylenpolymerbestandteil herzustellen, um das Propylenpolymer nach einem der vorhergehenden Ansprüche 1 bis 16 zu erhalten, und Gewinnen des erhaltenen Produkts.

26. Propylenpolymer, das durch ein Verfahren nach einem der vorhergehenden Ansprüche 17 bis 25 erhalten werden kann.

27. Verfahren zum Verringern des Gehalts an Aluminium und Bor von einem α-Olefinpolymer, das durch die Polymerisation vom alpha-Olefinmonomeren in der Gegenwart von einem Singe-Site-Metallocenkatalysator erhalten werden kann, wobei der Polymer unter Verwendung eines Verfahren hergestellt wird, wie es in einem der Ansprüche 17 bis 25 definiert ist.

28. Verwendung des Propylenpolymers nach einem der Ansprüche 1 bis 16 oder nach Anspruch 26 für Folien, Fasern oder geformte Artikel.

29. Verwendung des Propylenpolymers nach einem der vorhergehenden Ansprüche 1 bis 16 oder nach Anspruch 26 für Verpackungsartikel für Nahrung oder Medizin.

30. Artikel, umfassend das Propylenpolymer nach einem der vorhergehenden Ansprüche 1 bis 16 oder nach Anspruch 26.

31. Artikel nach Anspruch 30, wobei der Artikel eine Folie, Faser oder ein geformter Artikel ist.

32. Artikel nach Anspruch 30, wobei der Artikel ein Verpackungsartikel für Nahrung oder Medizin ist.

33. Schichtstruktur, vorzugsweise ein Folie, umfassend ein oder mehrere Schichten, von denen mindestens eine Schicht das Propylenpolymer nach einem der vorhergehenden Ansprüche 1 bis 16 oder nach Anspruch 26 umfasst.

34. Folie nach Anspruch 31 oder 33, umfassend mindestens eine Schicht, die im Wesentlichen aus dem Propylenpolymer nach einem der Ansprüche 1 bis 16 oder nach Anspruch 26 besteht.

35. Folie nach Anspruch 31, 33 oder 34, die eine Kondensatorfolie ist.

36. Biaxial orientierte Polypropylenfolie, umfassend ein Propylenpolymer nach einem der vorhergehenden Ansprüche 1 bis 16 oder nach Anspruch 26.

**Revendications**

1. Polymère de propylène pouvant être obtenu par une polymérisation à catalyseur monosite solide non fixé sur silice, le polymère ayant une teneur résiduelle en aluminium inférieure à 25 ppm, une teneur résiduelle en bore inférieure à 25 ppm, et une teneur en matières solubles dans le xylène (XS) inférieure à 1,0 % en poids, **caractérisé en ce que** le polymère de propylène est un homopolymère de propylène comprenant au moins deux composants d'homopolymère de propylène (i) et (ii) dans lequel un des composants (i) et (ii) est un composant de poids moléculaire faible (LMW) ayant un indice de fluage (MFR) plus élevé et l'autre des composants (i) et (ii) est un composant de poids moléculaire élevé (HMW) ayant un MFR plus faible.

2. Polymère de propylène selon la revendication 1 **caractérisé en ce que** le polymère de propylène est un homopolymère de propylène hautement cristallin.

3. Polymère de propylène selon la revendication 1 ou la renvendication 2, **caractérisé en ce que** le polymère de propylène a une isotacticité supérieure à 0,940 mmmm de concentration de pentad déterminée par spectrométrie RMN.

4. Polymère de propylène selon l'une quelconque des revendications précédentes dans lequel la teneur résiduelle en aluminium est inférieure à 10 ppm.

5. Polymère de propylène selon l'une quelconque des revendications précédentes dans lequel la teneur résiduelle en bore est inférieure à 10 ppm.

6. Polymère de propylène selon l'une quelconque des revendications précédentes dans lequel la teneur en cendres est inférieure à 50 ppm.

7. Polymère de propylène selon l'une quelconque des revendications précédentes dans lequel la teneur résiduelle en silicium est inférieure à 10 ppm.

8. Polymère de propylène selon l'une quelconque des revendications précédentes dans lequel la quantité résiduelle totale d'aluminium, de bore et de silicium est inférieure à 10 ppm.

9. Polymère de propylène selon l'une quelconque des revendications précédentes dans lequel la teneur résiduelle en chlore dans le polymère de propylène est inférieure à 10 ppm, plus préférablement inférieure à 5 ppm.

10. Polymère de propylène selon l'une quelconque des revendications précédentes dans lequel la teneur en volatils déterminée par GC-HS pendant une heure à 160 °C est inférieure à 400 ppm.

11. Polymère de propylène selon l'une quelconque des revendications précédentes **caractérisé en ce que** le polymère de propylène est un polymère de propylène fabriqué dans un réacteur.

12. Polymère de propylène selon l'une quelconque des revendications précédentes **caractérisé en ce que** le polymère de propylène a un Mw/Mn d'au plus 20,0.

13. Polymère de propylène selon l'une quelconque des revendications précédentes **caractérisé en ce que** le polymère de propylène a un $MFR_2$ d'au plus 10 g/10 min.

14. Polymère de propylène selon l'une quelconque des revendications précédentes **caractérisé en ce que** le polymère de propylène peut être obtenu par une polymérisation catalysée par métallocène, de préférence en l'absence d'un activateur contenant du bore en tant que co-catalyseur.

15. Polymère de propylène selon l'une quelconque des revendications précédentes **caractérisé en ce que** le polymère de propylène peut être obtenu par un catalyseur solide, non fixé sur silice, de préférence en présence d'un activateur contenant Al en tant que co-catalyseur.

16. Polymère de propylène selon l'une quelconque des revendications précédentes **caractérisé en ce que** le polymère de propylène peut être obtenu par un catalyseur solide qui : (1) comprend au moins un complexe de métallocène en tant que composant catalytiquement actif, facultativement conjointement avec un activateur en tant que co-catalyseur, et (2) a une productivité d'au moins 30 kg PP/g catalyseur, de préférence d'au moins 40 (kg PP)/(g catalyseur), plus préférablement d'au moins 50 (kg PP)/(g catalyseur).

17. Procédé de production d'un polymère de propylène selon l'une quelconque des revendications précédentes comprenant l'étape de polymérisation de propylène en présence d'un catalyseur monosite solide non fixé sur silice.

18. Procédé selon la revendication 17, dans lequel le catalyseur est un métallocène catalyseur non fixé sur silice comprenant un composé organométallique d'un métal de transition des groupes 3 à 10 de la table périodique (IUPAC), ou d'un actinide ou lantanide, sous la forme de particules de catalyseur solides, pouvant être obtenues par un procédé comprenant les étapes de

a) préparation d'une solution d'un ou plusieurs composants de catalyseur ;
b) dispersion de ladite solution dans un solvant non miscible dans celle-ci pour former une émulsion dans laquelle un ou plusieurs composants de catalyseur sont présents dans les gouttelettes de la phase dispersée,
c) solidification de ladite phase dispersée pour transformer lesdites gouttelettes en particules solides et facultativement récupérer lesdites particules pour obtenir ledit catalyseur.

19. Procédé selon la revendication 17 ou la revendication 18 dans lequel le catalyseur comprend un composant de catalyseur d'un composé de métal de transition de formule (I)

$$(L)_m R_n MX_q \qquad (I)$$

dans laquelle

M est un métal de transition tel que défini dans la revendication 18, et
chaque X est indépendamment un ligand $\sigma$,
chaque L est indépendamment un ligand organique qui est coordonné avec M,
R est un groupe de pontage reliant deux ligands L,
m est 1, 2 ou 3,
n est 0 ou 1,
q est 1, 2 ou 3 et
m+q est égal à la valence du métal.

20. Procédé selon l'une quelconque des revendications 17 à 19 dans lequel le catalyseur comprend en outre un co-catalyseur à base d'aluminium, de préférence un co-catalyseur d'aluminoxane.

21. Procédé selon l'une quelconque des revendications précédentes 17 à 20, dans lequel le solvant immiscible comprend un perfluorohydrocarbone ou un dérivé fonctionnalisé de celui-ci, de préférence un perfluoralcane, des alcènes ou des cycloalcanes en C3 à C30.

22. Procédé selon l'une quelconque des revendications précédentes 17 à 21, dans lequel (b) le système d'émulsion est facultativement formé en utilisant un agent d'émulsification et (c) ledit catalyseur est formé *in situ* à partir des composants de catalyseur dans ladite solution.

23. Procédé selon l'une quelconque des revendications précédentes 17 à 22, dans lequel la solidification est effectuée par un traitement par changement de température.

24. Procédé selon l'une quelconque des revendications 17 à 23, dans lequel le catalyseur comprend un composant de catalyseur à métallocène de formule (I)

$$(L)_m R_n MX_q \qquad (I)$$

dans laquelle

M est Zr, Hf ou Ti, et
chaque X est indépendamment un ligand a,
chaque L est indépendamment un ligand organique contenant un ligand cyclopentadiényle substitué ou non substitué qui est lié à M via une liaison $\pi$, de préférence un cyclopentadiényle, indényle, tétrahydroindényle ou fluorényle, où chacun dudit L peut être non substitué ou substitué par un ou plusieurs substituants ; R est un groupe de pontage reliant deux ligands L,

m est 1, 2 ou 3,

n est 0 ou 1,

q est 1, 2 ou 3 et

m+q est égal à la valence du métal.

25. Procédé selon l'une quelconque des revendications précédentes 17 à 24, **caractérisé en ce que** le procédé est un procédé à étapes multiples comprenant les étapes de

a) polymérisation de monomères de propylène en présence du catalyseur pouvant être obtenu selon l'une quelconque des revendications précédentes 17 à 24 pour produire un premier composant de polymère de propylène,

b) transfert du produit de réaction de l'étape a) dans un réacteur en phase gazeuse suivant,

c) polymérisation de propylène monomères en présence du produit de réaction de l'étape a) pour produire un deuxième composant de polymère de propylène pour obtenir le polymère de propylène tel que défini dans l'une quelconque des revendications précédentes 1 à 16 et récupérer le produit obtenu.

26. Polymère de propylène pouvant être obtenu par le procédé tel que défini dans l'une quelconque des revendications précédentes 17 à 25.

27. Procédé de réduction de la teneur en aluminium et en bore d'un polymère de $\alpha$-oléfine pouvant être obtenu par polymérisation de monomères de alpha-oléfine en présence d'un catalyseur monosite à métallocène, dans lequel ledit polymère est produit en utilisant un procédé tel que défini dans l'une quelconque des revendications 17 à 25.

28. Utilisation du polymère de propylène selon l'une quelconque des revendications 1 à 16 ou la revendication 26 pour des films, des fibres et des articles moulés.

29. Utilisation du polymère de propylène selon l'une quelconque des revendications précédentes 1 à 16 ou la revendication 26 pour des articles d'emballage alimentaire ou d'emballage médical.

30. Article comprenant le polymère de propylène selon l'une quelconque des revendications précédentes 1 à 16 ou la revendication 26.

31. Article selon la revendication 30, **caractérisé en ce que** l'article est un film, une fibre ou un article moulé.

32. Article selon la revendication 30, **caractérisé en ce que** l'article est un article d'emballage alimentaire ou d'emballage médical.

33. Structure stratifiée, de préférence un film, comprenant une ou plusieurs couches dont au moins une couche comprend le polymère de propylène de l'une quelconque des revendications précédentes 1 à 16 ou la revendication 26.

34. Film selon la revendication 31 ou la revendication 33, comprenant au moins une couche qui est essentiellement constituée du polymère de propylène tel que défini dans l'une quelconque des revendications 1 à 16 ou la revendication 26.

35. Film selon les revendications 31, 33 ou 34, qui est un film de condensateur.

36. Film de polypropylène à orientation biaxiale comprenant un polymère de propylène selon l'une quelconque des revendications précédentes 1 à 16 ou la revendication 26.

Fig. 1: Catalyst particle size distribution via Coulter counter

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0216455 A
- US 5573840 A
- EP 0887379 A
- WO 9212182 A
- WO 03051934 A
- EP 836608 A
- EP 576970 A
- EP 722956 A
- WO 9428034 A

### Non-patent literature cited in the description

- **T. HAYASHI ; Y. INOUE ; R. CHÜJÖ ; T. ASAKURA.** *Polymer,* 1988, vol. 29, 138-43
- **CHUJO R et al.** *Polymer,* 1994, vol. 35, 339
- Pyrolysis and GC in Polymer Analysis. Marcel Dekker, Inc, 1985